# Europäisches Patentamt
## European Patent Office
## Office européen des brevets

(11) Veröffentlichungsnummer: **0 342 672**
A1

(12) # EUROPÄISCHE PATENTANMELDUNG

(21) Anmeldenummer: 89108946.8

(22) Anmeldetag: 18.05.89

(51) Int. Cl.⁴: **F16H 3/66**

(30) Priorität: 18.05.88 CS 3347/88

(43) Veröffentlichungstag der Anmeldung:
23.11.89 Patentblatt 89/47

(84) Benannte Vertragsstaaten:
**DE FR GB IT**

(71) Anmelder: **U V M V USTAV PRO VYZKUM MOTOROVYCH VOZIDEL**
**Lihovarskà 12**
**CS-180 68 Praha 9-Vysocany(CS)**

(72) Erfinder: **Hau, Antonin, Dipl.-Ing. CSc**
**Praha 9**
**Mechemická 2561(CS)**

(74) Vertreter: **Patentanwälte Beetz sen. - Beetz jun. Timpe - Siegfried - Schmitt-Fumian-Mayr**
**Steinsdorfstrasse 10**
**D-8000 München 22(DE)**

(54) **Schaltgetriebe für Kraftfahrzeuge.**

(57) Gegenstand der Erfindung ist eine unifizierte Baukastenreihe von vier- bis sechsstufigen automatischen Schaltgetrieben mit Rückwärtsgang mit einer reduzierten Anzahl an Schaltkupplungen und Bremsen unter Beibehaltung geeignet abgestufter Übersetzungen, die unter Belastung schaltbar sind. Gemäß der Erfindung ist die Ausgangswelle 17 mit dem Steg 16 eines zusammeneingreifenden Planetenräderpaares 14, 15 des Ausgangsplanetengetriebes fest verbunden, dessen erstes Sonnenrad 11 mit dem Steg 6 des Eingangsplanetengetriebes verbunden ist. Das zweite Sonnenrad 12 des Ausgangsplanetengetriebes ist mittels einer Kupplung S1 mit der Eingangswelle 4 des Getriebes verbindbar und sein äußeres Zentralrad 13 ist über vorzugsweise eine Anfahrbremse B1 mit dem Getriebegehäuse 5 verbindbar. Der Steg 16 des zusammeneingreifenden Umlaufräderpaares 14, 15 ist mittels einer Kupplung S2 mit einem der Zentralräder verbindbar und das Eingangsplanetengetriebe trägt auf seinem Steg 6 doppelte Umlaufräder 7, die zusammen mit dem zweiten Sonnenrad 2 kämmen, das fest mit der Eingangswelle 4 des Getriebes verbunden ist und mit dem dritten Sonnenrad, das mit dem Getriebegehäuse 5 und bei dem 6 + 1-stufigen Getriebe auch

mit dem ersten Sonnenrad verbindbar ist, das mit dem Getriebegehäuse 5 verbindbar ist. Die verringerten Abmessungen und die verringerte Masse sowie die insgesamt vereinfachte und damit zuverlässigere Konstruktion des erfindungsgemäßen Getriebes wirken sich besonders vorteilhaft bei Kraftfahrzeugen aus.

FIG. 2

## Schaltgetriebe für Kraftfahrzeuge

Die Erfindung betrifft ein Schaltgetriebe insbesondere für Kraftfahrzeuge mit mehreren Vorwärts-Getriebestufen und einem Rückwärtsgang, bestehend aus wenigstens zwei Planetengetrieben mit Kupplungen und Bremsen zum wählbaren Verbinden der einzelnen Elemente der Planetengetriebe untereinander oder mit dem Getriebegehäuse.

Es sind Schaltgetriebe vergleichbarer Art mit wenigstens zwei Planetengetrieben bekannt, von denen eines ein Paar zusammeneingreifender Umlaufräder enthält. Zum Erhalt von sechs Vorwärts-Schaltstufen und einem Rückwärtsgang sind minimal acht Schaltelemente, d.h Bremsen oder Kupplungen, erforderlich, die hydraulisch angesteuert und betätigt werden. Der hydraulische Kreis und die Anzahl an Schaltelementen erhöhen die Herstellungskosten wesentlich und beeinflussen ungünstig die Größe sowie die Zuverlässigkeit des Schaltgetriebes.

Aufgabe der Erfindung ist die Schaffung eines gattungsgemäßen Schaltgetriebes mit wahlweise vier bis sechs Vorwärts-Schaltstufen und einem Rückwärtsgang im Baukastensystem, das die Vorteile bekannter Getriebe wie einen umfassenden Bereich gut abgestufter automatisch unter Last schaltbarer Übersetzungen, beibehält und bei dem gleichzeitig die Anzahl der Schaltkupplungen und Bremsen reduziert sowie alle Baukomponenten vereinheitlicht sind.

Diese Aufgabe wird bei einem Schaltgetriebe mit einem eingangsseitigen und einem ausgangsseitigen Planetengetriebe sowie Schaltkupplungen und Bremsen gemäß der Erfindung dadurch gelöst, daß die Ausgangswelle fest mit dem Steg des zusammeneingreifenden Umlaufräderpaares des Ausgangsplanetengetriebes verbunden ist, dessen erstes Zentralrad mit dem Steg des Eingangsplanetengetriebes verbunden ist, das zweite zentrale Rad (Sonnenrad) mittels Kupplung mit der Eintrittswelle des Getriebes verbindbar, das dritte Sonnenrad mittels Bremse mit dem Getriebekasten verbindbar, und der Steg des zusammeneingreifenden Umlaufräderpaares mittels Kupplung mit einem der angeführten Sonnenräder verbindbar ist, wobei das Eingangsplanetengetriebe auf seinem Steg doppelte Umlaufräder trägt, die zusammen mit dem zweiten Sonnenrad eingreifen, das fest mit der Eintrittswelle des Getriebes verbunden ist und dem dritten Sonnenrad, das mittels Bremse mit dem Getriebekasten verbindbar ist.

Für die Schaffung eines 6 + 1-stufigen Planetengetriebes sind die doppelten Umlaufräder des Eingangsplanetengetriebes im Eingriff mit dem ersten Sonnenrad, das mittels Bremse mit dem Getriebekasten verbindbar ist.

Ferner ist es vorteilhaft, die Bremse des dritten Sonnenrades des Ausgangsplanetengetriebes als Anfahrtsgetriebe auszubilden.

Vorteil des Schaltgetriebes gemäß vorliegender Erfindung ist bei einer geringeren Anzahl Getriebe die geringe Anzahl von Schaltelementen und somit einfachere Getriebe, kleinere Abmessungen und niedrigere Herstellungskosten bei Beibehaltung aller guten Eigenschaften dieser Getriebeart und vollkommene Unifikation der Getriebe mit 4 + 1 bis 6 + 1 Getriebestufen.

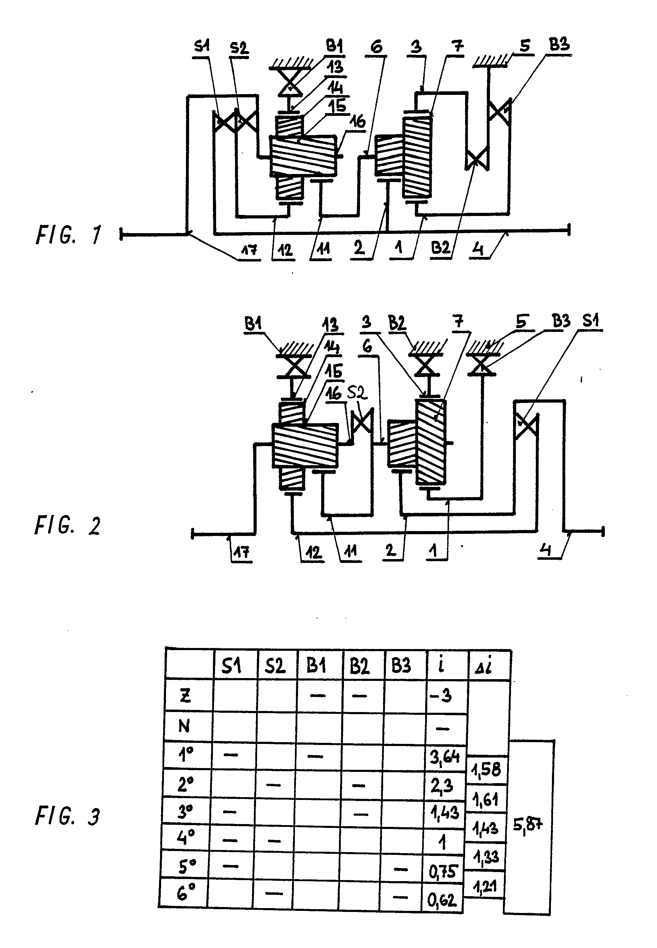

Auf den beigelegten Zeichnungen sind Ausführungsbeispiele des schaltbaren Planetengetriebes gemäß vorliegender Erfindung dargestellt, wobei auf Abbildung 1 das Schaltschema des 6 + 1-stufigen Getriebes mit einer der möglichen Blockierungsweisen des Planetengetriebes dargestellt ist. Abbildung 2 illustriert das Schaltschema eines 6 + 1-stufigen Getriebes mit einer anderen möglichen Blockierungsweise des Planetengetriebes, Abbildung 3 ist eine Tabelle, die eine Vorstellung von der Schaltung der 6 + 1 Getriebestufen mittels Kupplungen und Bremsen mit Information über das gesamte Übersetzungsverhältnis und das gegenseitige Verhältnis der benachbarten Übersetzungsstufen für die auf den Abbildungen 1 und 2 dargestellten Getriebe gibt. Bild 4 illustriert das Schema eines 4 + 1-stufigen Getriebes.

Bei der Getriebeausführung nach Fig. 1 ist die Eingangswelle 4 fest mit einem zweiten Sonnenrad 2 des Eingangsplanetengetriebes und durch eine Kupplung S1 mit einem zweiten Sonnenrad 12 des Ausgangsplanetengetriebes verbunden. Ein erstes Sonnenrad 1 des Eingangsplanetengetriebes ist durch eine Bremse B3 mit dem Getriebegehäuse 5 verbindbar und ein äußeres Zentralrad 3 dieses Getriebes ist durch eine Bremse B2 mit dem Getriebegehäuse 5 verbindbar. Der Planetenradträger 6 des Eingangsplanetengetriebes trägt die doppelten Planetenräder 7 und ist fest mit einem ersten Sonnenrad 11 des Ausgangsplanetengetriebes verbunden. Ein zweites Sonnenrad 12 ist mittels einer Kupplung S2 mit dem Planetenradträger 16 eines ineinandergreifenden Umlaufräderpaares 14, 15 des Ausgangsplanetengetriebes verbindbar. Der Planetenradträger 16 ist fest mit der Ausgangswelle 17 des Getriebes verbunden. Das äußere Zentralrad 13 des Ausgangsplanetengetriebes ist mittels einer Bremse B1 mit dem Betriebsgehäuse 5 verbindbar. Die Bremse B1 kann vorteilhaft als Anfahrbremse ausgeführt sein.

Bei der Ausführung nach Fig. 2 kann der Planetenradträger bzw. Steg 16 des Ausgangsplanetengetriebes mittels einer Kupplung S2 mit dem ersten Sonnenrad 11 dieses Getriebes verbunden werden. Die die Eingangswelle 4 des Schaltgetriebes mit dem zweiten Sonnenrad 12 des Ausgangsplanetengetriebes verbindende Kupplung S1 kann näher zum Eingang in das Getriebe angeordnet werden und ggfs. als Bestandteil des nicht dargestellten Schwungrades ausgeführt sein.

In der ersten Schaltstufe wird die Leistung von der Eingangswelle 4 über die eingerückte Kupplung S1 auf das zweite Sonnenrad 12 des Ausgangsplanetengetriebes und über dessen Planetenradträger 16 zur Ausgangswelle 17 geführt. Das äußere Zentralrad 13 des Ausgangsplanetengetriebes ist durch die betätigte Bremse B1 stillgesetzt, so daß das Ausgangsplanetengetriebe als Reduktionsgetriebe arbeitet und das Eingangsplanetengetriebe nicht belastet ist.

In der zweiten Schaltstufe wird die Leistung von der Eingangswelle 4 mit dem zweiten Sonnenrad 2 des Eingangsplanetengetriebes auf dessen kleineres Planetenrad 7 und vom Steg 6 über das Ausgangsplanetengetriebe bei eingerückter Kupplung S2 zur Ausgangswelle 17 geführt. Das äußere Zentralrad 3 des Eingangsplanetengetriebes ist durch die Bremse B2 stillgesetzt. Das Eingangsplanetengetriebe funktioniert als Reduktionsgetriebe und das Ausgangsplanetengetriebe überträgt die Leistung im blockierten Zustand.

In der dritten Schaltstufe wird die Leistung von der Eingangswelle 4 gleichzeitig zum zweiten Sonnenrad 2 des Eingangsgetriebes und über die betätigte Kupplung S1 zum zweiten Sonnenrad 12 des Ausgangsplanetengetriebes geführt. Vom Planetenradträger 6 des Eingangsgetriebes wird die Leistung zum ersten Sonnenrad 11 des Ausgangsgetriebes übertragen, und nach Addition mit der vom zweiten Sonnenrad 12 zum Ausgangsgetriebe geführten Leistung wird sie vom Planetenradträger 16 zur Ausgangswelle 17 des Schaltgetriebes geführt. Das äußere Zentralrad 3 des Eingangsgetriebes ist durch die Bremse B2 festgelegt. Das Eingangsplanetengetriebe funktioniert als Reduktionsgetriebe wie in der zweiten Schaltstufe und das Ausgangsplanetengetriebe arbeitet als Differenzialgetriebe (Leistungsaddierer).

In der vierten Schaltstufe wird bei der Ausführung nach Fig. 1 die Leistung von der Eingangswelle 4 über die eingerückten Kupplungen S1 und S2 direkt zur Ausgangswelle 17 geführt. Kein Räderwerk ist belastet.

Bei der Alternative nach Fig. 2 wird die Leistung von der Eingangswelle 4 über die Kupplung S1 zum zweiten Sonnenrad 12 des Ausgangsplanetengetriebes geführt, das von der Kupplung S2 blockiert wird und die Leistung zur Ausgangswelle 17 überträgt.

In der fünften Schaltstufe wird die Leistung von der Eingangswelle 4 gleichzeitig zum zweiten Sonnenrad 2 des Eingangsplanetengetriebes und über die eingerückte Kupplung S1 zum zweiten Sonnenrad 12 des Ausgangsplanetengetriebes geführt. Vom Steg 6 des Eingangsplanetengetriebes wird die Leistung zum ersten Sonnenrad 11 des Ausgangsplanetengetriebes geführt, und nach Addition mit der zum Ausgangsplanetengetriebe von seinem zweiten Sonnenrad 12 zugeführten Leistung wird sie vom Planetenradträger bzw. -steg 16 zur Ausgangswelle 17 des Schaltgetriebes geführt. Das erste Sonnenrad 1 des Eingangsplanetengetriebes ist durch die betätigte Bremse B3 festgelegt. Das Eingangsplanetengetriebe funktioniert als Schnellganggetriebe übereinstimmend mit der sechsten Stufe und das Ausgangsplanetengetriebe arbeitet als Differenzialgetriebe (Leistungsaddierer).

In der sechsten Schaltstufe wird die Leistung von der Eingangswelle 4 zum zweiten Sonnenrad 2 des Eingangsplanetengetriebes und vom Planetenradträger bzw. -steg 6 dieses Räderwerks über das durch die Kupplung S2 angeschlossene Ausgangsplanetengetriebe zur Ausgangswelle 17 geführt. Das erste Sonnenrad 1 des Eingangsplanetengetriebes ist durch die betätigte Bremse B3 stillgesetzt. Das Eingangsplanetengetriebe funktioniert als Schnellganggetriebe und das Ausgangsplanetengetriebe überträgt die Leistung im blockierten Zustand.

Im Rückwärtsgang wird die Leistung von der Eingangswelle 4 zum zweiten Sonnenrad 2 des Eingangsplanetengetriebes, vom Steg 6 dieses Räderwerks zum ersten Sonnenrad 11 des Ausgangsplanetengetriebes und von dessen Steg 16 zur Ausgangswelle 17 des Getriebes geführt. Die äußeren Zentralräder 3 und 13 des Eingangsplanetengetriebes des Ausgangsplanetengetriebes sind durch die Bremse B2 und B1 festgelegt. Das Eingangsplanetengetriebe funktioniert als Reduktionsgetriebe und das Ausgangsplanetengetriebe arbeitet als Wendegetriebe.

In der Tabelle der Fig. 3 sind die in den jeweiligen Schaltstufen eingerückten Kupplungen und Bremsen im zugehörigen Feld mit einem Querstrich angegeben. Ist die Kupplung oder Bremse gelöst, bleibt das Feld leer. Mit i ist das Übersetzungsverhältnis der jeweiligen Getriebestufe und mit $\Delta i$ das Verhältnis der benachbarten Übersetzungsverhältnisse bezeichnet. Z bedeutet Rückwärtsgang, N bedeutet Leerlauf und die Vorwärtsgänge sind mit $1°$ bis $6°$ bezeichnet.

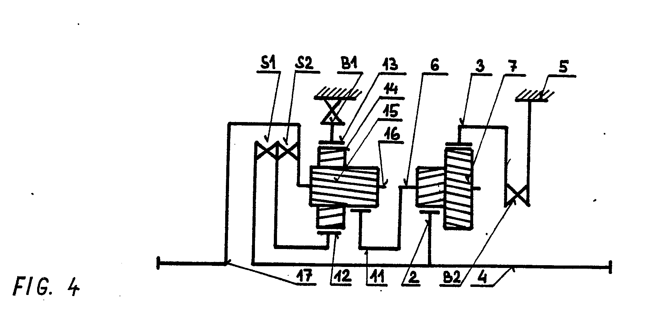

In Fig. 4 ist das Schaltschema eines 4 + 1-stufigen Schaltgetriebes dargestellt, das sich von den 6 + 1-stufigen Schaltgetrieben nach den Figuren 1 und 2 nur darin unterscheidet, daß das erste Sonnenrad 1 des Eingangsplanetengetriebes und die Bremse B3, mittels derer dieses erste Sonnenrad 1 mit Getriebekasten 5 verbindbar ist, fehlen. Alle übrigen Schaltelemente und Bauteile der Planetenrädersätze entsprechen den Ausführungen der Figuren 1 und 2. Dies gilt auch für die Schaltung des Rückwärtsganges, des Leerlaufes und der Getriebestufen 1 bis 4 so, wie es oben und in der Tabelle der Fig. 3 angegeben ist.

Auch dieses 4 + 1-stufige Schaltgetriebe ist mit Rücksicht auf nur vier Schaltelemente und Unifizierung mit dem weiter beschriebenen 6 + 1-stufigen Planetengetriebe vorteilhafter als die bisher bekannten 4 + 1-stufigen Planetengetriebe.

Die schaltbaren Planetengetriebe gemäß der Erfindung sind für die automatische Schaltung geeignet und können einen vorgeschalteten hydrodynamischen Wandler oder eine Kupplung aufweisen. Bei weniger anspruchsvollen Ausführungen sollte wenigstens die Bremse B1 des dritten Zentralrades 13 des Ausgangsplanetengetriebes als Anfahrbremse gestaltet sein.

**Ansprüche**

1. Schaltgetriebe mit Vorwärts-Getriebestufen und einem Rückwärtsgang, insbesondere für Kraftfahrzeuge, bestehend aus einer Eingangswelle, einer Ausgangswelle, einem Eingangsplanetengetriebe und einem Ausgangsplanetengetriebe sowie aus Kupplungen und Bremsen in einem gemeinsamen Gehäuse,
**dadurch gekennzeichnet,**
daß die Ausgangswelle (17) mit dem ein Paar zusammeneingreifender Planetenräder (14, 15) aufweisenden Planetenradträger (16) des Ausgangsplanetengetriebes verbunden ist, dessen eines Sonnenrad (11) mit dem Planetenradträger (6) des Eingangsplanetengetriebes verbunden ist,
daß ein zweites Sonnenrad (12) des Ausgangsplanetengetriebes über eine Kupplung (S1) mit der Eingangswelle (4) verbindbar ist,
daß das äußere Zentralrad (13) mittels einer Bremse (B1) mit dem Getriebegehäuse (5) und der Planetenradträger (16) mit dem ineinandergreifenden Planetenpaar (14, 15) mittels einer Kupplung (S2) mit einem der Zentralräder (11, 12, 13) verbindbar ist und
daß das Eingangsplanetengetriebe auf seinem Planetenradträger (6) doppelte Planetenräder (7) trägt, die mit einem fest mit der Eingangswelle (4) verbundenen zweiten Sonnenrad (2) und dem durch eine Bremse (B2) mit dem Gehäuse (5) verbindbaren äußeren Zentralrad (3) in Eingriff stehen.

2. Schaltgetriebe nach Anspruch 1, dadurch gekennzeichnet, daß die doppelten Planetenräder (7) des Eingangsplanetengetriebes mit seinem ersten Sonnenrad (1) kämmen, das durch eine Bremse (B3) mit dem Gehäuse (5) verbindbar ist.

3. Schaltgetriebe nach Anspruch 1, dadurch gekennzeichnet, daß die Bremse (B1) des dritten - äußeren - Zentralrades (13) des Ausgangsplanetengetriebes als Anfahrbremse ausgeführt ist.

4. Schaltgetriebe nach Anspruch 1, dadurch gekennzeichnet, daß die Planetenradträger (6, 16) der beiden Planetenradgetriebe durch eine Kupplung (S2) miteinander verbindbar sind (Fig. 2).

FIG. 1

FIG. 2

FIG. 3

| | S1 | S2 | B1 | B2 | B3 | i | Δi | |
|---|---|---|---|---|---|---|---|---|
| Z | | | — | — | | −3 | | |
| N | | | | | | — | | |
| 1° | — | | — | | | 3,64 | | |
| | | | | | | | 1,58 | |
| 2° | | — | | — | | 2,3 | | |
| | | | | | | | 1,61 | |
| 3° | — | | | — | | 1,43 | | |
| | | | | | | | 1,43 | 5,87 |
| 4° | — | — | | | | 1 | | |
| | | | | | | | 1,33 | |
| 5° | — | | | | — | 0,75 | | |
| | | | | | | | 1,21 | |
| 6° | | — | | | — | 0,62 | | |

S1  S2  B1  13  6  3  7  5

14
15
16

17  12  11  2  B2  4

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-1 018 544 (DAIMLER-BENZ AG)<br>* ganzes Dokument *<br>--- | 1,2 | F 16 H 3/66 |
| A | SOVIET INVENTIONS ILLUSTRATED Sektion Mechanik, Woche 8506, Zusammenfassung Nr. 036468 Q/64, 20. März 1985, Derwent Publications Ltd., London, GB; & SU - A - 1099150 (LISHITS II) 23.06.1984<br>--- | 1 | |
| A | FR-A-2 557 658 (USTAV PRO VYZKUM MOTOROVYCH VOZIDEL)<br>* figure 1; abstract *<br>----- | 1 | |

RECHERCHIERTE SACHGEBIETE (Int. Cl.4)

F 16 H

Der vorliegende Recherchenbericht wurde für alle Patentansprüche erstellt

| Recherchenort | Abschlußdatum der Recherche | Prüfer |
|---|---|---|
| BERLIN | 14-07-1989 | GERTIG I. |